# EUROPÄISCHE PATENTSCHRIFT

(11) **EP 3 959 655 B1**
(45) Veröffentlichungstag und Bekanntmachung des Hinweises auf die Patenterteilung: **03.05.2023**
(21) Anmeldenummer: 20720800.0
(22) Anmeldetag: 20.04.2020
(51) Int. Cl.: G06K 13/08, G06K 1/12

(54) **VORRICHTUNG UND VERFAHREN ZUM PERSONALISIEREN VON SICHERHEITS- ODER IDENTIFIKATIONSGEGENSTÄNDEN**
APPARATUS AND METHOD FOR PERSONALIZING SECURITY OR IDENTIFICATION ITEMS
DISPOSITIF ET PROCÉDÉ DE PERSONNALISATION D'OBJETS DE SÉCURITÉ OU D'IDENTIFICATION

(30) Priorität: 26.04.2019 DE 102019003028
(43) Veröffentlichungstag der Anmeldung: 02.03.2022
(73) Patentinhaber: Muehlbauer GmbH & Co. KG, 93426 Roding (DE)
(72) Erfinder: DABROWSKI, Hubert, 09113 Chemnitz (DE)
(74) Vertreter: Schmidt, Steffen J.
(86) Internationale Anmeldenummer: PCT/EP2020/060987
(87) Internationale Veröffentlichungsnummer: WO 2020/216711

(56) Entgegenhaltungen:
- EP-A1- 1 507 231
- WO-A1-2009/144571
- DE-A1- 19 641 892

## Beschreibung

### Technisches Gebiet

Die Anmeldung betrifft eine Vorrichtung zum Personalisieren von Sicherheits- oder Identifikationsgegenständen, kurz SI-Gegenständen, mit wenigstens einer Laserbearbeitungsstation, wobei die Laserbearbeitungsstation eine Lasereinheit aufweist, die dazu eingerichtet ist, einen, in einem Laserbearbeitungsbereich befindlichen SI-Gegenstand durch eine Laserbestrahlung zu personalisieren.

SI-Gegenstände können Karten, wie zum Beispiel ID-Karten, EC-Karten, oder aber Ausweisdokumente, wie zum Beispiel Personalausweise, Reisepässe, Zutritts- und andere Berechtigungsdokumente sein.

### Hintergrund

Es ist bekannt, zur Bearbeitung von SI-Gegenständen seriell in einer Fertigungsstraße angeordnete Bearbeitungsstationen zu verwenden. Auch eine Bearbeitung unter Nutzung parallel angeordneter Bearbeitungsstationen ist bekannt. Hierdurch ist ein besonders hoher Durchsatz möglicht

SI-Gegenstände weisen oft so genannte Personalisierungsdaten auf, das sind Text-, Zahlen- und/oder Bilddaten, die sich individuell auf den Inhaber des SI-Gegenstands beziehen. Beispiele für Personalisierungsdaten sind Name und Anschrift des Inhabers, Geburtsdatum, Geburtsort, Foto des Inhabers, biometrische Daten u. s. w. Üblicherweise werden SI-Gegenstände zunächst bis auf die Personalisierungsdaten gefertigt und anschließend durch eine Personalisierung mit den Personalisierungsdaten versehen.

Um einen SI-Gegenstand mit Personalisierungsdaten zu versehen, ist es bekannt, den SI-Gegenstand in einer Laserbearbeitungsstation zur Erzeugung einer Lasergravur mit einem Laser zu bestrahlen. Zur Vorbereitung der Laserbestrahlung wird hierbei der SI-Gegenstand in einem Laserbearbeitungsbereich der Laserbearbeitungsstation angeordnet und dabei definiert ausgerichtet, damit die folgende Laserbestrahlung des SI-Gegenstands in einer bestimmten räumlichen Zuordnung erfolgen kann. Außerdem müssen die gewünschten Daten, die sich auf die Lasergravur beziehen, als Ansteuersignale für den Laser an den Laser geleitet werden. Nach der Laserbestrahlung muss der SI-Gegenstand dann wieder aus der Laserbearbeitungsstation entfernt werden.

Eine solche Laserbestrahlung zur Personalisierung eines Personalausweises kann - in Abhängigkeit von dem verwendeten Laser und von dem Layout der Gravur - bis zu mehr als 20 Sekunden dauern. Damit dauert einschließlich der erwähnten vorbereitenden und nachbereitenden Abläufe die Laserbearbeitung eines SI-Gegenstands in der Laserbearbeitungsstation verhältnismäßig lange.

### Stand der Technik

Aus der DE 20 2005 012 928 U1 ist ein portables Personalisierungsgerät zum Beschriften von Datenträgern mittels einer integrierten Lasereinheit bekannt. In das Gerät können von vorne unterschiedliche Kassetteneinheiten eingeschoben werden. Dabei ist jede Kassetteneinheit jeweils einer spezifischen Form und einem spezifischen Typ von zu beschriftenden Datenträgern angepasst. So eignet sich das Personalisierungsgerät zum Beschriften unterschiedlich ausgebildeter Datenträger, wie Kunststoffkarten oder Reisepässe.

Aus der DE 10 2004 062 839 A1 ist eine Vorrichtung zur kontaktlosen Personalisierung von in Passbüchern integrierten Chips innerhalb einer Anlage zur Bearbeitung, Sortierung und/oder Verpackung einer Vielzahl von Passbüchern bekannt. Die Passbücher werden dabei entlang eines Haupttransportwegs in einer ersten Transportrichtung zu einem Anlagenmodul zur Personalisierung befördert und dort mittels Verschiebeeinrichtungen auf erste Nebentransportwege umgeleitet, auf denen sie senkrecht zur ersten Transportrichtung transportiert werden. Im Weiteren werden die Reisepässe dann mittels verschiebbarer Transportelemente - parallel zur ersten Transportrichtung - über Kodierstationen verschoben, in denen sie positioniert werden und dann mittels elektronischer kontaktloser Kodierung der Chips personalisiert werden. Anschließend werden die personalisierten Reisepässe - senkrecht zur ersten Transportrichtung - auf zweiten Nebentransportwegen zurück auf den Haupttransportweg geleitet. Die Vorrichtung ermöglicht hierdurch eine Kodierung der Chips mit hohem Durchsatz.

Aus der DE 10 2006 019 785 A1 ist eine Vorrichtung zum Kodieren von Chipkarten bekannt, die eine Zuführbahn für die Chipkarten aufweist, sowie mehrere, parallel zu der Zuführbahn orientierte Bearbeitungsbahnen mit Kodierstationen zum Kodieren der Karten. Zur Verteilung der Chipkarten auf die Bearbeitungsbahnen dient eine Übergabestation, in der die entlang der Zuführbahn herantransportierten Chipkarten auf zwei Kartenschlitten verteilt werden, über die die Chipkarten nach zwei Seiten senkrecht zur Zuführbahn zu den einzelnen Bearbeitungsbahnen weitertransportiert werden. Durch die Verwendung von zwei Kartenschlitten lassen sich die Chipkarten mit besonders hohem Durchsatz auf die Bearbeitungsbahnen verteilen.

Aus der EP 1 507 231 A1 ist ferner eine Vorrichtung mit den Merkmalen des Oberbegriffs des Anspruchs 1 bekannt.

### Aufgabe

Es ist prinzipiell erstrebenswert, dass eine entsprechende Personalisierungs-Vorrichtung bei möglichst geringem Herstellungsaufwand und möglichst kleiner Gestaltung einen besonders hohen Durchsatz bei der Personalisierung ermöglicht. Es kann daher als Aufgabe gesehen werden, eine entsprechende Vorrichtung anzugeben, die sich effektiv, einfach und kompakt gestalten lässt. Außerdem soll ein Verfahren zur Personalisierung angegeben werden, das besonders effektiv ist.

### Lösung

Diese Aufgabe wird mit einer Vorrichtung gemäß dem unabhängigen Anspruch 1 und einem Verfahren gemäß dem unabhängigen Anspruch 13 gelöst. Ausgestaltungen sind in den abhängigen Ansprüchen angegeben.

Hierzu ist gemäß der vorliegenden Anmeldung eine Vorrichtung zum Personalisieren von SI-Gegenständen vorgesehen, die wenigstens eine erste Laserbearbeitungsstation aufweist. Die Laserbearbeitungsstation hat eine Lasereinheit, die dazu eingerichtet ist, einen, in einem Laserbearbeitungsbereich befindlichen SI-Gegenstand durch eine Laserbestrahlung zu personalisieren. Die Laserbearbeitungsstation hat einen Drehteller mit einem ersten Aufnahmebereich zur Aufnahme eines ersten SI-Gegenstands und einem zweiten Aufnahmebereich zur Aufnahme eines zweiten SI-Gegenstands. Der Drehteller ist gegenüber der Lasereinheit um eine Drehachse drehbar gelagert, so dass er aus einer ersten Drehposition in eine zweite Drehposition gedreht werden kann. In der ersten Drehposition des Drehtellers befindet sich dabei der in dem ersten Aufnahmebereich aufgenommene erste SI-Gegenstand zumindest teilweise in dem Laserbearbeitungsbereich und in der zweiten Drehposition des Drehtellers befindet sich der in dem zweiten Aufnahmebereich aufgenommene zweite SI-Gegenstand zumindest teilweise in dem Laserbearbeitungsbereich.

Dadurch kann die Laserbestrahlung des in dem ersten Aufnahmebereich befindlichen ersten SI-Gegenstands erfolgen, während zeitlich überlappend hierzu für den zweiten SI-Gegenstand Schritte zur Vorbereitung der Laserbestrahlung als solcher unter Nutzung des zweiten Aufnahmebereichs durchgeführt werden. Dies kann insbesondere ein Laden des zweiten SI-Gegenstands in den zweiten Aufnahmebereich und ein Erfassen der Lage des zweiten SI-Gegenstands in dem zweiten Aufnahmebereich umfassen. In einem folgenden Schritt kann der Drehteller aus der ersten Drehposition in die zweite Drehposition gedreht werden, so dass sich der zweite SI-Gegenstand dann zumindest teilweise in dem Laserbearbeitungsbereich befindet. Während der Drehung kann ein Übermitteln der Lageinformation an die Lasereinheit erfolgen. Nun kann die Laserbestrahlung des zweiten SI-Gegenstands unter Nutzung der übermittelten Lageinformation erfolgen. Hierzu zeitlich überlappend kann der erste SI-Gegenstand aus dem ersten Aufnahmebereich entfernt bzw. entladen werden. Anschließend kann - immer noch während der Laserbestrahlung des zweiten SI-Gegenstands ein dritter SI-Gegenstand in den dann wieder freien ersten Aufnahmebereich geladen werden u. s. w. Auf diese Weise lässt sich die Lasereinheit zeitlich besonders gut ausnutzen.

Die genannten Schritte zur Vorbereitung der Laserbestrahlung eines SI-Gegenstands und das Entfernen des SI-Gegenstands nach erfolgter Laserbestrahlung werden hier auch als "Nebenschritte" bezeichnet. Die Zeiten, die zur Durchführung der Nebenschritte erforderlich sind, werden als "Nebenzeiten" bezeichnet.

Bei den SI-Gegenständen handelt es sich insbesondere um gleichartige bzw. um identisch geformte SI-Gegenstände. In einer Variante handelt es sich um Booklets, beispielsweise um Reisepässe.

Die Laserbearbeitungsstation hat in einer Variante ein Gehäuse, wobei die Lasereinheit und die Drehachse gegenüber dem Gehäuse in ihrer Lage fixiert sind. Beispielsweise ist in einer Variante die Drehachse vertikal orientiert. Die Lasereinheit ist in einer Ausgestaltung oberhalb des Drehtellers, insbesondere senkrecht über dem Laserbearbeitungsbereich angeordnet. Der Drehteller ist in einer Ausgestaltung derart geformt, dass er sich zumindest in erster Näherung in einer Ebene erstreckt, die normal zur Drehachse orientiert ist. Insbesondere ist die Gestaltung derart, dass sich, wenn sich der Drehteller in der ersten Drehposition befindet, der Laserbearbeitungsbereich nicht in den zweiten Aufnahmebereich hinein erstreckt.

Dabei weist die Vorrichtung, insbesondere die Laserbearbeitungsstation eine Laserbestrahlung-Vorbereitungseinheit zur Vorbereitung einer Laserbestrahlung auf, wobei die Laserbestrahlung-Vorbereitungseinheit dazu eingerichtet ist, in der ersten Drehposition des Drehtellers eine Lage des in dem zweiten Aufnahmebereich aufgenommenen zweiten SI-Gegenstands zu erfassen und eine Information über die erfasste Lage an die Lasereinheit zu übermitteln. Dabei ist die Lasereinheit dazu ausgestaltet, die übermittelte Information als Eingangsgröße bei einer folgenden Laserbestrahlung des zweiten SI-Gegenstands zu verwenden. Zur Steuerung der hier beschriebenen Abläufe weist die Vorrichtung insbesondere eine Steuereinheit auf.

Die Laserbestrahlung als solche dauert typischerweise länger als die Nebenzeiten. Daher hat in einer Variante der Drehteller lediglich zwei Aufnahmebereiche. So kann gleichzeitig der eine Aufnahmebereich zur Laserbestrahlung verwendet werden, während der andere für die Nebenschritte genutzt werden kann. Ein weiterer Aufnahmeraum würde somit keine weitere Zeitersparnis ermöglichen und lediglich eine größere Gestaltung des Drehtellers zur Folge haben. Daher lässt sich der Drehteller und damit auch die gesamte Laserbearbeitungsstation besonders raumsparend gestalten, wenn die Gesamtzahl der Aufnahmebereiche des Drehtellers lediglich zwei beträgt.

In einer Variante sind dabei der erste Aufnahmebereich und der zweite Aufnahmebereich mit Bezug auf die Drehachse symmetrisch gestaltet.

Gemäß einer Ausgestaltung kann der Drehteller aus der ersten Drehposition durch eine Drehung um 180° ± 10° um die Drehachse in die zweite Drehposition gedreht werden. Auf diese Weise kann der Drehteller so gestaltet sein, dass - bei Betrachtung entlang der Drehachse - eine Hälfte des Drehtellers im Wesentlichen durch den ersten Aufnahmebereich eingenommen ist und die andere Hälfte im Wesentlichen durch den zweiten Aufnahmebereich. So lässt sich der Drehteller insgesamt besonders kompakt gestalten.

Alternativ hat der Drehteller mehr als zwei Aufnahmebereiche, beispielsweise drei oder vier entsprechende Aufnahmebereiche. Die Drehung aus der ersten Drehposition in die zweite Drehposition erfolgt dann dementsprechend im Fall von drei Aufnahmebereichen zum Beispiel um 120°, im Fall von vier Aufnahmebereichen um 90° u. s. w.

Gemäß einer Ausgestaltung weist der Drehteller einen ersten Auflagebereich und einen ersten Deckbereich zur Bildung des ersten Aufnahmebereichs auf, derart, dass sich der in dem ersten Aufnahmebereich aufgenommene erste SI-Gegenstand zwischen dem ersten Auflagebereich und dem ersten Deckbereich befindet, sowie einen zweiten Auflagebereich und einen zweiten Deckbereich zur Bildung des zweiten Aufnahmebereichs, derart, dass sich der in dem zweiten Aufnahmebereich aufgenommene zweite SI-Gegenstand zwischen dem zweiten Auflagebereich und dem zweiten Deckbereich befindet. Durch die Aufnahme- und Deckbereiche können eine Art Taschen gebildet sein, wodurch sich die SI-Gegenstände zum Laden besonders einfach in den betreffenden Aufnahmebereich hinein transportieren lassen und zum Entladen auch wieder aus dem Aufnahmebereich entfernen lassen. Dies ist insbesondere im Fall von SI-Gegenständen in Form eines Booklets vorteilhaft. In einer Ausgestaltung ist die Gestaltung derart, dass das Booklet in einem aufgeschlagenen Zustand in den Aufnahmebereich aufgenommen bzw. geladen wird. Der Auflagebereich hat in einer Variante dabei zur Aufnahme eines Bundbereichs des Booklets eine Nut.

Gemäß einer Ausgestaltung hat der erste Deckbereich einen Fensterbereich und der zweite Deckbereich einen Fensterbereich, wobei in der ersten Drehposition des Drehtellers der erste Fensterbereich zumindest teilweise den Laserbearbeitungsbereich umschließt. So lässt sich erzielen, dass ein aus dem Laser abgestrahlter Laserstrahl den SI-Gegenstand praktisch ungeschwächt erreicht.

In einer Variante hat der Drehteller außerdem ein zwischen einer Klemmposition und einer Offenposition hin und her bewegbares erstes Klemmelement, wobei der in dem ersten Aufnahmebereich aufgenommene erste SI-Gegenstand in der Klemmposition des ersten Klemmelements durch das erste Klemmelement gegen einen Randbereich des Fensterbereichs des ersten Deckbereichs gedrückt ist, so dass hierdurch der erste SI-Gegenstand in dem ersten Aufnahmebereich fixiert ist. In der Offenposition des ersten Klemmelements ist der erste SI-Gegenstand zwischen dem ersten Auflagebereich und dem ersten Deckbereich bewegbar. Weiter hat bei dieser Variante der Drehteller ein zwischen einer Klemmposition und einer Offenposition hin und her bewegbares zweites Klemmelement, wobei der in dem zweiten Aufnahmebereich aufgenommene zweite SI-Gegenstand in der Klemmposition des zweiten Klemmelements durch das zweite Klemmelement gegen einen Randbereich des Fensterbereichs des zweiten Deckbereichs gedrückt ist, so dass hierdurch der zweite SI-Gegenstand in dem zweiten Aufnahmebereich fixiert ist. In der Offenposition des zweiten Klemmelements ist der zweite SI-Gegenstand zwischen dem zweiten Auflagebereich und dem zweiten Deckbereich bewegbar.

So lässt sich erzielen, dass ein SI-Gegenstand während der Laserbestrahlung besonders geeignet in dem Aufnahmebereich durch das betreffende Klemmelement fixiert ist. In der Offenposition ist ein Laden und Entladen des Aufnahmebereichs besonders geeignet möglich.

Die Klemmelemente sind in einer Ausgestaltung derart gelagert, dass sie durch eine Bewegung parallel zur Drehachse aus der Offenposition in die Klemmposition gebracht werden können.

Gemäß einer Ausgestaltung haben die Klemmelemente eine zum Kontakt mit einem SI-Gegenstand vorgesehene Klemmfläche, die bei Betrachtung entlang der Drehachse etwas größer ist als der betreffende Fensterbereich. So lässt sich eine besonders sichere Klemmung oder Fixierung des SI-Gegenstands bewirken. Allerdings kann abhängig von der Art und/oder Größe der SI-Gegenstände alternativ die Klemmfläche auch kleiner als oder genauso groß sein wie der Fensterbereich.

In einer Variante hat die Laserbearbeitungsstation außerdem ein Greifelement, das dazu eingerichtet ist, in der ersten Drehposition des Drehtellers das zweite Klemmelement zwischen der Offenposition und der Klemmposition hin und her zu bewegen. Zur Vorbereitung eines Ladevorgangs lässt sich das betreffende Klemmelement durch das Greifelement in die Offenposition bewegen. In diesem Zustand kann ein SI-Gegenstand ungehindert zwischen den Auflagebereich und den Deckbereich des betreffenden Aufnahmebereichs eingebracht beispielsweise geschoben werden. Sobald der SI-Gegenstand eingeschoben ist, also der Aufnahmebereich geladen ist, kann durch das Greifelement das Klemmelement in die Klemmposition bewegt werden. Dann ist der SI-Gegenstand geeignet fixiert.

In einer Variante ist wenigstens ein Federelement vorgesehen, das das Klemmelement in die Klemmposition drückt. Beispielsweise kann das wenigstens eine Federelement zwischen dem betreffenden Auflagebereich und dem Klemmelement wirkend vorgesehen sein. Ohne Einwirkung des Greifelements ist somit ein in dem betreffenden Aufnahmeraum befindlicher SI-Gegenstand fixiert.

Gemäß einer Ausgestaltung hat die Vorrichtung bzw. die Laserbearbeitungsstation außerdem eine Ladeeinheit, die dazu eingerichtet ist, in der ersten Drehposition des Drehtellers zum Laden des zweiten Aufnahmebereichs den zweiten SI-Gegenstand entlang einer ersten Richtung in den zweiten Aufnahmebereich hineinzuschieben, und zum Entladen des zweiten Aufnahmebereichs den zweiten SI-Gegenstand entlang einer, zur ersten Richtung entgegengesetzten zweiten Richtung aus dem zweiten Aufnahmebereich herauszuschieben. So lässt sich erzielen, dass ein SI-Gegenstand auf derselben Seite des Drehtellers in einen Aufnahmebereich geladen wird und auch wieder aus dem Aufnahmebereich entfernt bzw. entladen wird. Dies ist vorteilhaft, weil hierdurch eine besonders raumsparende Gestaltung ermöglicht ist.

Die Ladeeinheit hat in einer Ausgestaltung einen ersten Schieber zum Hineinschieben des SI-Gegenstands in den Aufnahmebereich, also zum Laden, und/oder einen zweiten Schieber zum Hinausschieben des SI-Gegenstands aus dem Aufnahmebereich, also zum Entladen des Aufnahmebereichs.

Gemäß einer Ausgestaltung hat der Drehteller ein erstes Ausrichtelement, das dazu gestaltet ist, einen SI-Gegenstand definiert auszurichten, während dieser durch die Ladeeinheit in den ersten Aufnahmebereich geschoben wird, sowie ein zweites Ausrichtelement, das dazu gestaltet ist, einen SI-Gegenstand definiert auszurichten, während dieser durch die Ladeeinheit in den zweiten Aufnahmebereich geschoben wird.

Gemäß einer Ausgestaltung weist die Vorrichtung außerdem wenigstens eine weitere Laserbearbeitungsstation auf, die analog zu der ersten Laserbearbeitungsstation ausgebildet ist, sowie eine Transportvorrichtung, die dazu eingerichtet ist, SI-Gegenstände abwechselnd der ersten und der wenigstens einen weiteren Laserbearbeitungsstation zuzuführen. Auf diese Weise lässt sich eine parallele Laserbearbeitung der SI-Gegenstände erzielen und somit eine weitere Erhöhung des Durchsatzes.

In einer Variante ist die Transportvorrichtung dazu eingerichtet, die SI-Gegenstände jeweils der Ladeeinheit der betreffenden Laserbearbeitungsstation zuzuführen.

Die Transportvorrichtung hat in einer Variante einen Haupttransportweg, sowie zwei, senkrecht zum Haupttransportweg verlaufende Verteiltransportwege, wobei die Transportvorrichtung dazu eingerichtet ist, die SI-Gegenstände über den Haupttransportweg und die zwei Verteiltransportwege den Laserbearbeitungsstationen zuzuführen und die SI-Gegenstände von den Laserbearbeitungsstationen wieder auf den Haupttransportweg zurück zu transportieren.

Die beiden Verteiltransportwege erstrecken sich gemäß einer Ausgestaltung mit Bezug auf den Haupttransportweg auf zwei gegenüberliegenden Seiten.

In einer Variante führen die Verteiltransportwege jeweils zu mindestens zwei Laserbearbeitungsstationen, beispielsweise zu jeweils vier Laserbearbeitungsstationen.

Weiterhin hat die Transportvorrichtung in einer Variante außerdem eine, zwischen dem Haupttransportweg und den Verteiltransportwegen angeordnete Trenneinheit, über die die SI-Gegenstände abwechselnd von dem Haupttransportweg auf die zwei Verteiltransportwege transportiert werden. Hierdurch lässt sich erzielen, dass ein SI-Gegenstand über den ersten Verteiltransportweg zu einer Laserbearbeitungsstation transportiert wird, wobei ein, dem SI-Gegenstand als nächster folgender SI-Gegenstand bereits auf den zweiten Verteiltransportweg geleitet werden kann, bevor der erste Verteiltransportweg wieder für die Aufnahme eines weiteren SI-Gegenstands frei ist. So lässt sich der Durchsatz erhöhen. Weiterhin ist gemäß einer Ausgestaltung eine Verbindungseinheit vorgesehen, durch die die fertig personalisierten SI-Gegenstände, die durch die beiden Verteiltransportwege zurücktransportiert werden, wieder auf den Haupttransportweg geleitet werden.

Gemäß einem weiteren Aspekt der Anmeldung ist ein Verfahren zum Personalisieren von SI-Gegenständen mit wenigstens einer ersten Laserbearbeitungsstation vorgesehen, das die folgenden Schritte aufweist:
(a) Anordnen eines ersten SI-Gegenstands in einem ersten Aufnahmebereich eines Drehtellers der Laserbearbeitungsstation;
(b) Anordnen eines zweiten SI-Gegenstands in einem zweiten Aufnahmebereich des Drehtellers;
(c) Laserbestrahlen des in dem ersten Aufnahmebereich aufgenommenen ersten SI-Gegenstands für eine Personalisierung, wenn sich der Drehteller in einer ersten Drehposition befindet, mittels einer Lasereinheit der Laserbearbeitungsstation;
(d) Drehen des Drehtellers aus der ersten Drehposition in eine zweite Drehposition;
(e) Laserbestrahlen des in dem zweiten Aufnahmebereich aufgenommenen zweiten SI-Gegenstands für eine Personalisierung, wenn sich der Drehteller in der zweiten Drehposition befindet, mittels der Lasereinheit.

Der Schritt (b) wird in einer Variante zeitlich überlappend mit dem Schritt (c) durchgeführt. Ferner weist das Verfahren außerdem den folgenden Schritt auf:
(f) Erfassen einer Lage des in dem zweiten Aufnahmebereich aufgenommenen zweiten SI-Gegenstands, wenn sich der Drehteller in der ersten Drehposition befindet und Verwenden einer Information über die Lage im Schritt (e).

Der Schritt (f) wird in einer Variante zeitlich überlappend mit dem Schritt (c) durchgeführt. Dabei wird im Schritt (d) der Drehteller um 180° ± 10° gedreht.

In einer Variante wird im Schritt (b) in der ersten Drehposition des Drehtellers der zweite SI-Gegenstand entlang einer ersten Richtung in den zweiten Aufnahmebereich geschoben und in einem weiteren Schritt (g) in der ersten Drehposition des Drehtellers der zweite SI-Gegenstand entlang einer zur ersten Richtung entgegengesetzten zweiten Richtung aus dem zweiten Aufnahmebereich heraus geschoben.

Der Schritt (g) wird in einer Variante zeitlich überlappend mit dem Schritt (c) durchgeführt.

Im Schritt (b) wird der zweite SI-Gegenstand vorzugsweise zwischen einem zweiten Auflagebereich und einem zweiten Deckbereich des Drehtellers mittels eines zweiten Klemmelements in seiner Lage fixiert.

Gemäß einer Ausgestaltung ist weiterhin der folgende Schritt vorgesehen:
(h) Transportieren von SI-Gegenständen und Aufteilen der SI-Gegenstände auf mehrere Laserbearbeitungsstationen.

### Ausführungsbeispiele

Weitere Merkmale, Eigenschaften, Vorteile und mögliche Abwandlungen werden für einen Fachmann anhand der nachstehenden Beschreibung deutlich, in der auf die beigefügten Zeichnungen Bezug genommen ist. Es zeigen
- Fig. 1: eine perspektivische Skizze einer Laserbearbeitungsstation;
- Fig. 2: eine perspektivische Skizze des Drehtellers der Laserbearbeitungsstation;
- Fig. 3: eine schematische Seitenansicht des Drehtellers und einer Ladeeinheit zum Laden und Entladen des Drehtellers mit SI-Gegenständen; und
- Fig. 4: eine schematische Darstellung einer Vorrichtung mit mehreren Laserbearbeitungsstationen.

Die beigefügten Zeichnungen, der technische Inhalt und die detaillierte Beschreibung beziehen sich auf bevorzugte Ausführungsformen, was jedoch nicht als Beschränkung des Anmeldungsgegenstands aufzufassen ist. Alle gleichwertigen Variationen und Änderungen, die entsprechend den beigefügten Ansprüchen der vorliegenden Anmeldung vorgenommen werden, seien hier offenbart.

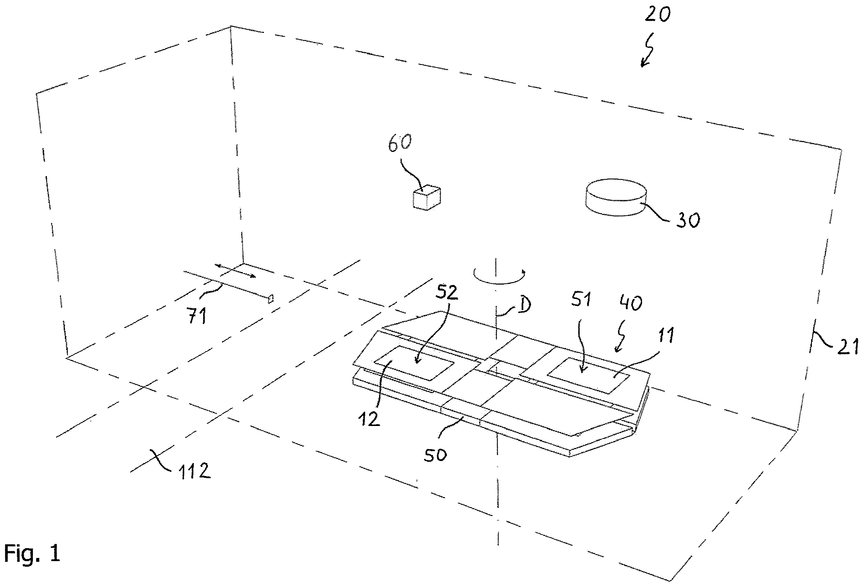

Fig. 1 zeigt schematisch eine Laserbearbeitungsstation 20 einer Vorrichtung zum Personalisieren von SI-Gegenständen 11, 12. Bei den SI-Gegenständen kann es sich insbesondere um Booklets wie beispielsweise Reisepässe handeln.

Die Laserbearbeitungsstation 20 hat eine Lasereinheit 30, die dazu eingerichtet ist, einen, in einem Laserbearbeitungsbereich 40 befindlichen SI-Gegenstand durch eine Laserbestrahlung zu personalisieren. Durch die Laserbestrahlung wird dabei in dem SI-Gegenstand eine Lasergravur erzeugt.

Weiter hat die Laserbearbeitungsstation 20 einen Drehteller 50 mit einem ersten Aufnahmebereich 51 zur Aufnahme eines ersten SI-Gegenstands 11 und mit einen zweiten Aufnahmebereich 52 zur Aufnahme eines zweiten SI-Gegenstands 12.

Dabei ist der Drehteller 50 gegenüber der Lasereinheit 30 um eine Drehachse D drehbar gelagert, so dass er aus einer - in Fig. 1 gezeigten - ersten Drehposition in eine zweite Drehposition gedreht werden kann. Der Drehteller 50 kann durch eine Drehung um 180° aus der ersten Drehposition in die zweite Drehposition gedreht werden. Mit anderen Worten unterscheiden sich die beiden Drehpositionen um 180°.

Die Laserbearbeitungsstation hat ein in Fig. 1 lediglich angedeutetes Gehäuse 21, in dem die Lasereinheit 30 lagefest angeordnet ist. Der Drehteller 50 ist dabei derart gegenüber dem Gehäuse 21 gelagert, dass die Drehachse D unveränderlich orientiert ist, insbesondere vertikal. Die Lasereinheit 30 ist oberhalb des Drehtellers 50 angeordnet, so dass ein von der Lasereinheit 30 nach unten gerichteter Laserstrahl in den Laserbearbeitungsbereich 40 gelangt.

Der Laserbearbeitungsbereich 40 erstreckt sich lediglich über einen Teil des Drehtellers 50. In der ersten Drehposition des Drehtellers 50 ist der zweite Aufnahmebereich 52 außerhalb des Laserbearbeitungsbereichs 40 angeordnet.

Die beiden Aufnahmebereiche 51, 52 sind mit Bezug auf die Drehachse D symmetrisch gestaltet.

In der ersten Drehposition des Drehtellers 50 befindet sich der in dem ersten Aufnahmebereich 51 angeordnete erste SI-Gegenstand 11 zumindest teilweise in dem Laserbearbeitungsbereich 40 und der in dem zweiten Aufnahmebereich 52 angeordnete zweite SI-Gegenstand 12 außerhalb des Laserbearbeitungsbereichs 40.

In der zweiten Drehposition des Drehtellers 50 befindet sich der in dem zweiten Aufnahmebereich 52 angeordnete zweite SI-Gegenstand 12 zumindest teilweise in dem Laserbearbeitungsbereich 40 und der in dem ersten Aufnahmebereich 51 angeordnete erste SI-Gegenstand 11 außerhalb des Laserbearbeitungsbereichs 40.

Weiter hat die Laserbearbeitungsstation 20 eine Laserbestrahlung-Vorbereitungseinheit 60 zur Vorbereitung einer Laserbestrahlung, wobei die Laserbestrahlung-Vorbereitungseinheit 60 dazu eingerichtet ist, in der ersten Drehposition des Drehtellers 50 eine Lage des in dem zweiten Aufnahmebereich 52 aufgenommenen zweiten SI-Gegenstands 12 zu erfassen und eine Information über die erfasste Lage an die Lasereinheit 30 zu übermitteln. Dabei ist die Lasereinheit 30 dazu ausgestaltet, die übermittelte Information als Eingangsgröße bei einer folgenden Laserbestrahlung des zweiten SI-Gegenstands 12 zu verwenden.

Auf diese Weise lässt sich eine automatische Layout-Anpassung an die erfasste Lage des betreffenden SI-Gegenstands erzielen. Dies ist außerdem hilfreich, falls sich der SI-Gegenstand, also beispielsweise ein Pass im Aufnahmebereich geringfügig drehen oder verrutschen sollte, denn so kann der SI-Gegenstand gelasert werden, ohne dass die Lasereinheit hierfür verstellt werden muss. So lässt sich insgesamt ein Ausschuss verringern.

Die Laserbestrahlung-Vorbereitungseinheit 60 weist in einer Ausgestaltung eine Kamera auf, mit der zur Lageerfassung ein Bild des in dem zweiten Aufnahmebereich 52 aufgenommenen zweiten SI-Gegenstands 12 aufgenommen werden kann. Die Kamera ist dabei ebenfalls gegenüber dem Gehäuse 21 in der Lage fixiert angeordnet.

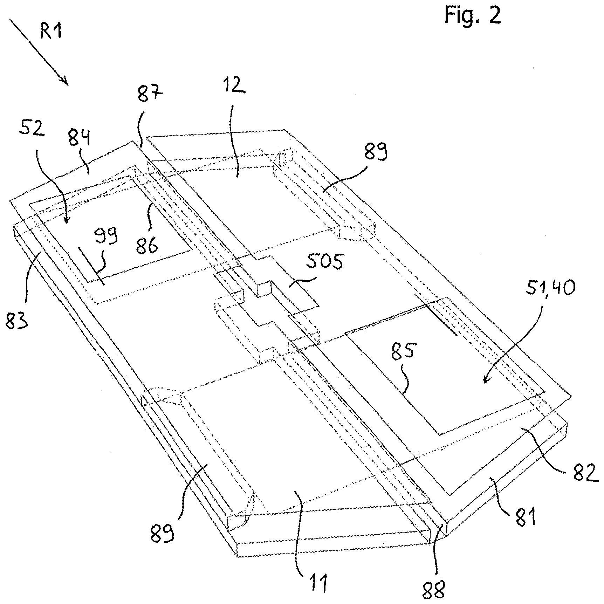

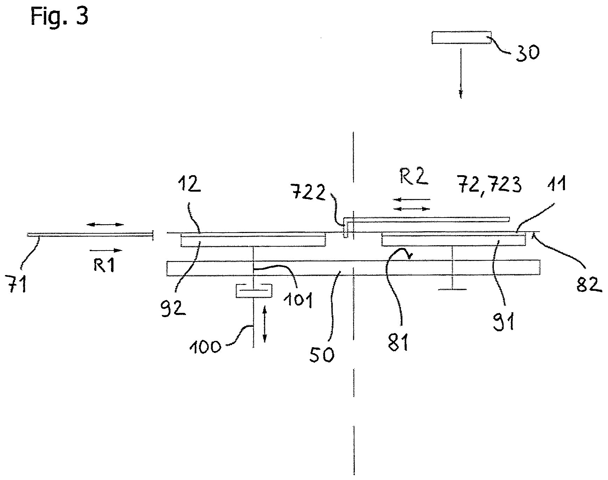

In Fig. 2 ist der Drehteller 50 in separierter Form perspektivisch skizziert, Fig. 3 zeigt den Drehteller 50 von einer Seite betrachtet. In Fig. 2 sind der erste SI-Gegenstand 11 und der zweite SI-Gegenstand 12 gestrichelt angedeutet.

Der Drehteller 50 hat einen ersten Auflagebereich 81 und einen ersten Deckbereich 82 zur Bildung des ersten Aufnahmebereichs 51, derart, dass sich der in dem ersten Aufnahmebereich 51 aufgenommene erste SI-Gegenstand 11 zwischen dem ersten Auflagebereich 81 und dem ersten Deckbereich 82 befindet. Der erste Auflagebereich 81 und der erste Deckbereich 82 sind dabei im Wesentlichen parallel zueinander angeordnet, so dass zwischen ihnen eine Art Tasche zur Aufnahme eines SI-Gegenstands gebildet ist.

Weiterhin hat der Drehteller 50 einen zweiten Auflagebereich 83 und einen zweiten Deckbereich 84 zur Bildung des zweiten Aufnahmebereichs 52, derart, dass sich der in dem zweiten Aufnahmebereich 52 aufgenommene zweite SI-Gegenstand 12 zwischen dem zweiten Auflagebereich 83 und dem zweiten Deckbereich 84 befindet. Die Gestaltung ist hierbei symmetrisch zum ersten Auflagebereich 81 und zum ersten Deckbereich 82.

Die Gestaltung ist weiterhin derart, dass ein SI-Gegenstand durch eine geradlinige Bewegung entlang einer ersten Richtung R1 von außerhalb in den zweiten Aufnahmebereich 52 hinein geschoben werden kann, wenn sich der Drehteller 50 in der, in den Figuren gezeigten, ersten Drehposition befindet. Da die Gestaltung zur Drehachse D symmetrisch ist, lässt sich in der zweiten Drehposition des Drehtellers 50 ein SI-Gegenstand durch eine geradlinige Bewegung entlang der ersten Richtung R1 von außerhalb in den ersten Aufnahmebereich 51 hinein schieben.

Wie in Fig. 3 angedeutet, hat die Laserbearbeitungsstation 20 zum Laden der Aufnahmebereiche 51, 52 eine Ladeeinheit 70, die dazu eingerichtet ist, in der ersten Drehposition des Drehtellers 50 zum Laden des zweiten Aufnahmebereichs 52 den zweiten SI-Gegenstand 12 entlang der ersten Richtung R1 in den zweiten Aufnahmebereich 52 hineinzuschieben, und zum Entladen des zweiten Aufnahmebereichs 52 den zweiten SI-Gegenstand 12 entlang einer, zur ersten Richtung R1 entgegengesetzten zweiten Richtung R2 aus dem zweiten Aufnahmebereich 52 herauszuschieben. Die Ladeeinheit 70 hat in einer Ausgestaltung hierzu einen ersten Schieber 71 zum Hineinschieben eines SI-Gegenstands entlang der ersten Richtung R1 und/oder einen zweiten Schieber 72 zum Herausschieben eines SI-Gegenstands entlang der zweiten Richtung R2. Die Schieber 71, 72 weisen zumindest teilweise einen linearen und/oder einen gewinkelten Aufbau auf. Im gezeigten Beispiel weist der erste Schieber 71 einen, sich entlang der ersten Richtung R1 erstreckenden linearen Aufbau auf. Der zweite Schieber 72 weist einen gewinkelten, L-förmigen Aufbau auf, so dass ein vertikaler Abschnitt 722 und ein horizontaler Abschnitt 723 des zweiten Schiebers 72 gebildet sind. Dabei erstreckt sich der horizontale Abschnitt entlang der zweiten Richtung R2. Mit seinem vertikalen Abschnitt 722 greift der zweite Schieber 72 in einer (in Fig. 3 skizzierten) Ausgangs-Ruhestellung in einen Freibereich 505 ein, der um die Drehachse D des Drehtellers 50 herum durch die Auflagebereiche 81, 83 und die Deckbereiche 82, 84 gebildet ist. Der Freibereich 505 hat beispielsweise einen rechteckigen oder kreisförmigen horizontalen Querschnitt.

Dabei ist die Gestaltung derart, dass während der Drehung des Drehtellers 50 aus der ersten Drehposition in die zweite Drehposition der vertikale Abschnitt 722 des zweiten Schiebers 72 in den Freibereich 505 eingreifend verbleiben kann, wenn sich der zweite Schieber 72 dabei in der Ausgangs-Ruhestellung befindet. Der horizontale Abschnitt 723 des zweiten Schiebers 72 ist, wie in Fig. 3 angedeutet, über dem Drehteller 50 angeordnet.

Zum Antrieb der Schieber 71, 72 ist in einer Ausgestaltung ein Linearantrieb und/oder ein Zahnstangen-Ritzel-Antrieb vorgesehen.

In einer (in den Figuren nicht gezeigten) Variante ist die Ladeeinheit 70 dazu ausgestaltet, einen SI-Gegenstand um eine zur ersten Richtung R1 parallele Drehachse um 180° zu wenden, so dass auch die andere Seite des SI-Gegenstands gelasert werden kann.

Zur Aufnahme eines Bundbereichs eines SI-Gegenstands in Form eines Booklets ist in der gezeigten Ausgestaltung an den Auflagebereichen 81, 83 jeweils eine Nut 88 ausgebildet, die sich parallel zur ersten Richtung R1 (und damit auch parallel zur zweiten Richtung R2) erstreckt. Alternativ oder, wie im gezeigten Beispiel der Fall, ergänzend ist hierfür an den Deckbereichen 82, 84 jeweils eine Ausnehmung 87 ausgebildet, die sich parallel zur ersten Richtung R1 erstreckt. Die Nuten 88 bzw. Ausnehmungen 87 erstrecken sich vom Rand des Drehtellers 50 durchgehend bis zu dem Freibereich 505.

Gemäß einer Ausgestaltung sind die Nuten 88 bzw. Ausnehmungen 87 je nach Gestaltung der betreffenden SI-Gegenstände, wie in Fig. 2 angedeutet, quer zur ersten Richtung R1 versetzt in den beiden Auflagebereichen 81, 83 bzw. Deckbereichen 82, 84 ausgebildet; alternativ sind sie in einer Linie fluchtend ausgebildet.

Die Nuten 88 bzw. Ausnehmungen 87 sind außerdem als vorzugsweise kontaktlose Führung für den ersten Schieber 71 und/oder den zweiten Schieber 72 ausgestaltet. Hierzu sind die Nuten 88 bzw. Ausnehmungen 87 - quer zur ersten Richtung R1 betrachtet - mindestens genauso breit bzw. geringfügig breiter als die Schieber 71, 72. Die Nuten 88 bzw. Ausnehmungen 87 münden dabei derart in der Mitte des Drehtellers 50 in den Freibereich 505, dass der zweite Schieber 72 mit seinem vertikalen Abschnitt 722 während der Drehung des Drehtellers 50 in den Freibereich 505 eingreifen kann, ohne die Drehung zu behindern. Für einen Entlade-Vorgang kann der zweite Schieber 72 ausgehend von seiner Ausgangs-Ruhestellung mit seinem vertikalen Abschnitt 722 entlang der betreffenden Nut 88 bzw. der betreffenden Ausnehmung 87 bewegt werden und auf diese Weise den entsprechenden SI-Gegenstand aus dem Drehteller 50 heraus schieben. Durch diese Gestaltung entfällt insbesondere das Erfordernis einer vertikalen Bewegung des zweiten Schiebers 72.

Der erste Schieber 71 kann für einen Lade-Vorgang aus einer (in Fig. 3 skizzierten) Ausgangs-Ruhelage, in der er nicht in den Bewegungsraum des Drehtellers 50 eingreift, entlang der ersten Richtung R1 bewegt werden, um einen SI-Gegenstand in den Drehteller 50 zu fördern. Bei dieser Bewegung kann der erste Schieber 71 in die betreffende Nut 88 bzw. in die betreffende Ausnehmung 87 eingreifen.

Diese Gestaltung der Zusammenwirkung zwischen dem Drehteller 50 und den beiden Schiebern 71, 72 ermöglicht bei kompakter Anordnung einen besonders schnellen und dabei schonenden Transport der SI-Gegenstände in den und aus dem Drehteller 50, vor allem, weil die Bewegung der Schieber 71, 72 teilweise direkt im Drehteller 50 stattfindet.

In einer nicht gezeigten Alternative können die Nuten 88 bzw. Ausnehmungen 87 unmittelbar ineinander übergehend ausgebildet sein, also ohne den Freibereich 505.

Der Drehteller 50 weist an einer Seite jedes Aufnahmebereichs 51, 52 jeweils ein Ausrichtelement 89 auf, das dazu dient, einen SI-Gegenstand während des Ladevorgangs an dieser Seite definiert auszurichten. Das Ausrichtelement 89 ist in einer Variante in seiner Lage einstellbar, so dass es auf eine gewünschte Breite / Dimension der SI-Gegenstände bzw. der Reisepässe eingestellt werden kann. Gemäß einer weiteren Variante ist das Ausrichtelement 89 senkrecht zur ersten Richtung R1 und dabei horizontal vorgespannt, zum Beispiel durch eine Rückstellfeder. So lässt sich bewirken, dass sich das Ausrichtelement 89 beim Laden eines SI-Gegenstands zurückschiebt und sich somit automatisch an den SI-Gegenstand anpasst bzw. diesen fixiert.

Das Ausrichtelement 89 und/oder die Auflagebereiche 81, 83 haben in einer Ausführung wenigstens einen sich verjüngenden bzw. schrägen Randbereich in Form einer Anlaufschräge, durch die ein Laden eines SI-Gegenstands erleichtert ist und gleichzeitig die entsprechenden Ecken und/oder Kanten des SI-Gegenstands geschont werden.

Weiterhin weist der erste Deckbereich 82 einen Fensterbereich 85 auf und der zweite Deckbereich 84 einen Fensterbereich 86, wobei in der ersten Drehposition des Drehtellers 50 der Fensterbereich 85 des ersten Deckbereichs 82 zumindest teilweise den Laserbearbeitungsbereich 40 umschließt. Die Gestaltung ist also derart, dass - in der ersten Drehposition des Drehtellers 50 - die Laserbestrahlung durch den Fensterbereich 85 des ersten Deckbereichs 82 hindurch erfolgen kann. So kann die Laserstrahlung ungehindert bzw. ungeschwächt auf den dort befindlichen SI-Gegenstand treffen.

Die Deckbereiche 82, 84 sind in einer Ausgestaltung reversibel lösbar am restlichen Drehteller 50 angeordnet. So können die Deckbereiche 82, 84 auf einfache Weise gegen entsprechende (in den Figuren nicht gezeigte) weitere Deckbereiche ausgetauscht werden, die sich in ihren Fensterbereichen von den Deckbereichen 82, 84 unterscheiden. Auf diese Weise lässt sich gegebenenfalls eine geeignete Anpassung an eine bestimmte Art und/oder Größe von SI-Gegenständen oder an ein bestimmtes Laser-Layout erzielen.

Weiterhin hat der Drehteller 50 außerdem ein zwischen einer Klemmposition und einer Offenposition hin und her bewegbares erstes Klemmelement 91. Dabei ist das erste Klemmelement 91 derart gelagert, dass es parallel zur Drehachse D hin und her verschiebbar ist, so dass es durch eine Bewegung entlang dieser Richtung, beispielsweise, entsprechend der Darstellung in Fig. 3, durch eine nach oben gerichtete Bewegung aus der Offenposition in die Klemmposition bewegt werden kann und durch eine Bewegung in der Gegenrichtung, beispielsweise eine nach unten gerichtete Bewegung, aus der Klemmposition in die Offenposition.

Der in dem ersten Aufnahmebereich 51 aufgenommene erste SI-Gegenstand 11 in der Klemmposition des ersten Klemmelements 91 ist durch das erste Klemmelement 91 - hier von unten - gegen einen Randbereich des Fensterbereichs 85 des ersten Deckbereichs 82 gedrückt. Hierdurch ist der erste SI-Gegenstand 11 in dem ersten Aufnahmebereich 51 fixiert. Durch diese Fixierung kann der erste SI-Gegenstand 11 für die Laserbestrahlung geeignet definiert in Position gehalten werden. In der Offenposition des ersten Klemmelements 91 hingegen ist der erste SI-Gegenstand 11 zwischen dem ersten Auflagebereich 81 und dem ersten Deckbereich 82 bewegbar.

Weiterhin hat der Drehteller 50 ein zwischen einer Klemmposition und einer Offenposition hin und her bewegbares zweites Klemmelement 92, wobei der in dem zweiten Aufnahmebereich 52 aufgenommene zweite SI-Gegenstand 12 in der Klemmposition des zweiten Klemmelements 92 durch das zweite Klemmelement 92 gegen einen Randbereich des Fensterbereichs 86 des zweiten Deckbereichs 84 gedrückt ist. Hierdurch ist der zweite SI-Gegenstand 12 in dem zweiten Aufnahmebereich 52 fixiert, und in der Offenposition des zweiten Klemmelements 92 ist der zweite SI-Gegenstand 12 zwischen dem zweiten Auflagebereich 83 und dem zweiten Deckbereich 84 bewegbar. In der Offenposition des zweiten Klemmelements 92 lässt sich also der zweite SI-Gegenstand 12 in der zweiten Richtung R2 aus dem zweiten Aufnahmebereich 52 herausschieben, beispielsweise durch den zweiten Schieber 72.

Die Laserbearbeitungsstation 20 hat weiterhin ein, unterhalb des Drehtellers 50 angeordnetes Greifelement 100, das dazu eingerichtet ist, in der ersten Drehposition des Drehtellers 50 das zweite Klemmelement 92 zwischen der Offenposition und der Klemmposition hin und her zu bewegen. Hierzu ist das Greifelement 100 parallel zur Drehachse bzw. vertikal verschiebbar gegenüber dem Gehäuse 21 der Laserbearbeitungsstation 20 gelagert. Das zweite Klemmelement 92 weist an seiner Unterseite einen nach unten gerichteten Fortsatz 101 auf, der durch das Greifelement 100 erfasst werden kann. Der Fortsatz 101 ragt hierzu durch eine, hierfür in dem zweiten Auflagebereich 83 vorgesehene Durchgangsöffnung hindurch.

Die Gestaltung an der Stelle des ersten Klemmelements 91 ist insoweit analog, so dass in der zweiten Drehposition des Drehtellers 50 das erste Klemmelement 91 durch das Greifelement 100 entsprechend bewegt werden kann.

Die Klemmelemente 91, 92 sind in einer Ausgestaltung durch jeweils wenigstens ein (in den Figuren nicht gezeigtes) Federelement in die Klemmposition vorgespannt, so dass ohne Einwirkung des Greifelements 100 der betreffende SI-Gegenstand durch das jeweilige Klemmelement 91, 92 fixiert ist. Insbesondere kann die Gestaltung derart sein, dass während der Beginn der Drehung des Drehtellers 50 aus der ersten Drehposition in die zweite Drehposition der Fortsatz 101 seitlich aus dem Greifelement 100 herausbewegt wird, so dass das betreffende Klemmelement in der Klemmposition verbleibt. So ist eine geeignete Fixierung der SI-Gegenstände während der Laserbestrahlung ermöglicht.

Um ein Herauswölben des ersten SI-Gegenstands 11 in dem Fensterbereich 85 des ersten Deckbereichs 82 zu verhindern, weist der Drehteller 50 einen Bügel 99 auf, der am Randbereich des Fensterbereichs 85 befestigt ist und den SI-Gegenstand in Richtung auf das erste Klemmelement 91 drückt. Der Bügel 99 ist derart gestaltet, dass er nicht in einen Bereich hineinragt, der für die Lasergravur vorgesehen ist. Durch den Bügel 99 lässt sich für das Layout der Lasergravur eine besonders hohe Genauigkeit sicherstellen.

Am zweiten Deckbereich 84 ist ein entsprechender weiterer Bügel 99 vorgesehen.

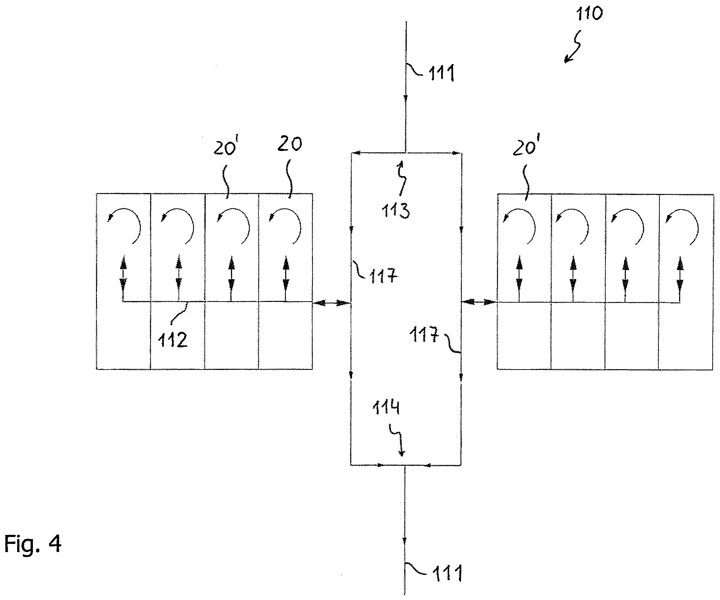

In Fig. 4 ist ein Beispiel einer Vorrichtung skizziert, die außer der Laserbearbeitungsstation 20 noch wenigstens eine weitere Laserbearbeitungsstation 20' aufweist. Beispielhaft ist hier ein Fall mit insgesamt acht Laserbearbeitungsstationen 20, 20'skizziert. Die wenigstens eine weitere Laserbearbeitungsstation 20' ist dabei analog zu der ersten Laserbearbeitungsstation 20 ausgebildet.

Die Vorrichtung umfasst eine Transportvorrichtung 110, die dazu eingerichtet ist, SI-Gegenstände abwechselnd der ersten und der wenigstens einen weiteren Laserbearbeitungsstation 20, 20' zuzuführen.

Die Transportvorrichtung 110 ist dazu eingerichtet, die SI-Gegenstände jeweils der Ladeeinheit 70 der betreffenden Laserbearbeitungsstation 20, 20' zuzuführen, so dass die SI-Gegenstände, wie oben beschrieben, in die beiden Aufnahmebereiche 51, 52 des betreffenden Drehtellers 50 geladen werden können. Nach einer Drehung des Drehtellers 50 erfolgt die Laserbestrahlung, durch die die SI-Gegenstände personalisiert werden. Nach einer weiteren Drehung des Drehtellers 50 werden die SI-Gegenstände durch die Ladeeinheit 70 wieder aus dem Drehteller 50 entladen. In Fig. 4 ist das Laden und Entladen jeweils durch einen Doppelpfeil angedeutet, und das Drehen des jeweiligen Drehtellers 50 durch einen bogenförmigen Pfeil.

Die Transportvorrichtung 110 hat einen Haupttransportweg 111, sowie zwei, zumindest quer oder senkrecht zum Haupttransportweg 111 verlaufende Verteiltransportwege 112. Die Transportvorrichtung 110 ist dazu eingerichtet, die SI-Gegenstände über den Haupttransportweg 111 und die zwei Verteiltransportwege 112 den Laserbearbeitungsstationen 20, 20' bzw. deren Ladeeinheiten 70 zuzuführen und die SI-Gegenstände von den Laserbearbeitungsstationen 20, 20' wieder auf den Haupttransportweg 111 zurück zu transportieren. Dabei führen in einer Variante für einen hohen Durchsatz die beiden Verteiltransportwege 112 jeweils zu mindestens zwei Laserbearbeitungsstationen 20, 20'. In Fig. 1 ist der entsprechende, zu der ersten Laserbearbeitungsstation 20 führende Verteiltransportweg 112 gestrichelt angedeutet.

Für eine besonders geeignete Aufteilung der SI-Gegenstände auf die beiden Verteiltransportwege 112 weist die Vorrichtung außerdem eine, zwischen dem Haupttransportweg 111 und den Verteiltransportwegen 112 angeordnete Trenneinheit 113 auf, über die die SI-Gegenstände von dem Haupttransportweg 111 abwechselnd über Paralleltransportwege 117 auf die zwei Verteiltransportwege 112 transportiert werden. In diesem Fall ist außerdem eine Verbindungseinheit 114 vorgesehen, über die die fertig personalisierten SI-Gegenstände von den Verteiltransportwegen 112 wieder auf den Haupttransportweg 111 geleitet werden.

Die Transportvorrichtung 110 kann Führungen aufweisen, die dazu dienen, SI-Gegenstände in Form von Booklets während des Transports in geöffnetem Zustand zu halten.

Die Transportwege 111, 112, 117 weisen in einer Variante endlose Zahnriemen auf. Die Riemen auf den Transportwegen 111 und 117 haben in einer Ausgestaltung Mitnehmer zum Bewegen der SI-Gegenstände, wobei zum Transport insbesondere vorgesehen ist, dass sich die SI-Gegenstände jeweils zwischen den Mitnehmern befinden. Zur Änderung einer Transportrichtung, beispielsweise an einem Übergang von einem der Paralleltransportwege 117 auf den anschließenden Verteiltransportweg 112 ist in einer Variante ein Pneumatik-Element vorgesehen.

Die Vorrichtung hat in einer Ausgestaltung außerdem wenigstens eine weitere Bearbeitungseinheit für eine weitere Bearbeitung der SI-Gegenstände oder wenigstens eine Kontrolleinheit für eine Kontrolle der SI-Gegenstände, die entlang des Haupttransportwegs 111 vor oder nach den Laserbearbeitungsstationen 20, 20' angeordnet sind.

Ein Verfahren zum Personalisieren von SI-Gegenständen mit wenigstens einer ersten Laserbearbeitungsstation weist die folgenden Schritte auf:
(a) Anordnen eines ersten SI-Gegenstands 11 in einem ersten Aufnahmebereich 51 eines Drehtellers 50 der Laserbearbeitungsstation 20;
(b) Anordnen eines zweiten SI-Gegenstands 12 in einem zweiten Aufnahmebereich 52 des Drehtellers 50;
(c) Laserbestrahlen des in dem ersten Aufnahmebereich 51 aufgenommenen ersten SI-Gegenstands 11 für eine Personalisierung, wenn sich der Drehteller 50 in einer ersten Drehposition befindet, mittels einer Lasereinheit 30 der Laserbearbeitungsstation 20;
(d) Drehen des Drehtellers 50 aus der ersten Drehposition in eine zweite Drehposition;
(e) Laserbestrahlen des in dem zweiten Aufnahmebereich 52 aufgenommenen zweiten SI-Gegenstands 12 für eine Personalisierung, wenn sich der Drehteller 50 in der zweiten Drehposition befindet, mittels der Lasereinheit 30.

In einer Variante ist außerdem der folgende Schritt vorgesehen:
(f) Erfassen einer Lage des in dem zweiten Aufnahmebereich 52 aufgenommenen zweiten SI-Gegenstands 12, wenn sich der Drehteller 50 in der ersten Drehposition befindet und Verwenden einer Information über die Lage im Schritt (e).

Zur zeitlichen Abfolge ist in einer Variante der folgende Ablauf vorgesehen. Die Punkte stehen dabei jeweils für eine zeitliche Phase, wobei die dargestellte Reihenfolge der Punkte dem zeitlichen Ablauf der Phasen entspricht.
- Stellen des Drehtellers 50 in die zweite Drehposition
- Laden eines ersten SI-Gegenstands in den ersten Aufnahmebereich 51 (im Schritt (a))
- Erfassen der Lage des ersten SI-Gegenstands in dem ersten Aufnahmebereich 51 mittels der Laserbestrahlungs-Vorbereitungseinheit 60 und Erstellen einer entsprechenden Lageinformation
- Drehen des Drehtellers aus der zweiten Drehposition in die erste Drehposition (die Figuren 1 bis 3 zeigen die erste Drehposition)
- Laserbestrahlen des ersten SI-Gegenstands unter Nutzung der Lageinformation (im Schritt (c))
   und
   Laden eines zweiten SI-Gegenstands in den zweiten Aufnahmebereich 52 (im Schritt (b))
      und
   Erfassen der Lage des zweiten SI-Gegenstands in dem zweiten Aufnahmebereich 52 mittels der Laserbestrahlungs-Vorbereitungseinheit 60 und Erstellen einer entsprechenden Lageinformation (im Schritt (f))
- Drehen des Drehtellers 50 aus der ersten Drehposition in die zweite Drehposition (im Schritt (d))
- Laserbestrahlen des zweiten SI-Gegenstands unter Nutzung der Lageinformation (im Schritt (e))
   und
   Entladen des ersten SI-Gegenstands aus dem ersten Aufnahmebereich 51
      und
   Laden eines dritten SI-Gegenstands in den ersten Aufnahmebereich 51
      und
   Erfassen der Lage des dritten SI-Gegenstands in dem ersten Aufnahmebereich 51 mittels der Laserbestrahlungs-Vorbereitungseinheit 60 und Erstellen einer entsprechenden Lageinformation
- Drehen des Drehtellers 50 aus der zweiten Drehposition in die erste Drehposition
u. s. w.

Das Drehen des Drehtellers 50 erfolgt in einer Ausgestaltung jeweils in entgegengesetzte Drehrichtungen, so dass der Drehteller 50 zwischen den beiden Drehpositionen hin und her dreht. Alternativ hierzu erfolgen die Drehungen jeweils in dieselbe Drehrichtung, so dass der Drehteller 50 bei jeder Drehung weitergedreht wird.

Die Übermittlung der entsprechenden Lageinformationen findet in einer Ausgestaltung jeweils während der Drehung des Drehtellers 50 statt.

Weiterhin wird in einer Variante zum Laden im Schritt (b) in der ersten Drehposition des Drehtellers 50 der zweite SI-Gegenstand 12 entlang der ersten Richtung R1 in den zweiten Aufnahmebereich 52 geschoben und in einem weiteren Schritt (g) in der ersten Drehposition des Drehtellers 50 der zweite SI-Gegenstand 12 entlang einer zur ersten Richtung R1 entgegengesetzten zweiten Richtung R2 aus dem zweiten Aufnahmebereich 52 heraus geschoben. Hierzu werden in einer Ausgestaltung die oben erwähnten Schieber 71, 72 verwendet.

In einer Vorrichtung mit mehreren Laserbearbeitungsstationen 20, 20' ist in einer Variante außerdem der folgende Schritt vorgesehen:
(h) Transportieren von SI-Gegenständen und Aufteilen der SI-Gegenstände auf mehrere Laserbearbeitungsstationen 20, 20'.

Mit der beschriebenen Vorrichtung lässt sich erzielen, dass die Anzahl der parallel eingesetzten Laserbearbeitungsstationen besonders gering gehalten werden kann. Durch die Nutzung mehrerer parallel arbeitender Laserbearbeitungsstationen lässt sich der begrenzende Einfluss der Nebenzeiten auf den Durchsatz besonders klein halten bzw. praktisch eliminieren.

Dabei lässt sich die Vorrichtung vergleichsweise kompakt gestalten, insbesondere mit kleinem Grundriss.

Die vorangehend beschriebenen Varianten der Vorrichtung sowie deren Aufbau- und Betriebsaspekte dienen lediglich dem besseren Verständnis der Struktur, der Funktionsweise und der Eigenschaften; sie schränken die Offenbarung nicht etwa auf die Ausführungsbeispielen ein. Die Figuren sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal welches/welche in den Figuren oder im Text offenbart ist/sind, mit allen Ansprüchen, jedem Merkmal im Text und in den anderen Figuren, anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen des beschriebenen Systems zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Figuren umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Vorrichtung zum Personalisieren von Sicherheits- oder Identifikationsgegenständen, kurz SI-Gegenständen (11, 12) mit wenigstens einer ersten Laserbearbeitungsstation (20), wobei die Laserbearbeitungsstation (20) folgendes aufweist:
- eine Lasereinheit (30), die dazu eingerichtet ist, einen, in einem Laserbearbeitungsbereich (40) befindlichen SI-Gegenstand (11, 12) durch eine Laserbestrahlung zu personalisieren,
- einen Drehteller (50) mit einem ersten Aufnahmebereich (51) zur Aufnahme eines ersten SI-Gegenstands (11) und mit einem zweiten Aufnahmebereich (52) zur Aufnahme eines zweiten SI-Gegenstands (12); wobei
- der Drehteller (50) gegenüber der Lasereinheit (30) um eine Drehachse (D) drehbar gelagert ist, so dass er aus einer ersten Drehposition in eine zweite Drehposition gedreht werden kann; wobei
- sich in der ersten Drehposition des Drehtellers (50) der in dem ersten Aufnahmebereich (51) angeordnete erste SI-Gegenstand (11) zumindest teilweise in dem Laserbearbeitungsbereich (40) befindet; und wobei
- sich in der zweiten Drehposition des Drehtellers (50) der in dem zweiten Aufnahmebereich (52) angeordnete zweite SI-Gegenstand (12) zumindest teilweise in dem Laserbearbeitungsbereich (40) befindet, **dadurch gekennzeichnet, dass** die Vorrichtung weiterhin aufweist:
- eine Laserbestrahlung-Vorbereitungseinheit (60) zur Vorbereitung einer Laserbestrahlung,
wobei die Laserbestrahlung-Vorbereitungseinheit (60) dazu eingerichtet ist, in der ersten Drehposition des Drehtellers (50) eine Lage des in dem zweiten Aufnahmebereich (52) aufgenommenen zweiten SI-Gegenstands (12) zu erfassen und eine Information über die erfasste Lage an die Lasereinheit (30) zu übermitteln;
und wobei
- die Lasereinheit (30) dazu ausgestaltet ist, die übermittelte Information als Eingangsgröße bei einer folgenden Laserbestrahlung des zweiten SI-Gegenstands (12) zu verwenden.

2. Vorrichtung nach Anspruch 1, bei der der Drehteller (50) aus der ersten Drehposition durch eine Drehung um 180° ± 10° um die Drehachse (D) in die zweite Drehposition gedreht werden kann.

3. Vorrichtung nach einem der vorhergehenden Ansprüche, bei der
- der Drehteller (50) einen ersten Auflagebereich (81) und einen ersten Deckbereich (82) zur Bildung des ersten Aufnahmebereichs (51) aufweist, derart, dass sich der in dem ersten Aufnahmebereich (51) aufgenommene erste SI-Gegenstand (11) zwischen dem ersten Auflagebereich (81) und dem ersten Deckbereich (82) befindet, sowie
- einen zweiten Auflagebereich (83) und einen zweiten Deckbereich (84) zur Bildung des zweiten Aufnahmebereichs (52), derart, dass sich der in dem zweiten Aufnahmebereich (52) aufgenommene zweite SI-Gegenstand (12) zwischen dem zweiten Auflagebereich (83) und dem zweiten Deckbereich (84) befindet.

4. Vorrichtung nach Anspruch 3, bei der
- der erste Deckbereich (82) einen Fensterbereich (85) aufweist und der zweite Deckbereich (84) einen Fensterbereich (86), wobei
- in der ersten Drehposition des Drehtellers (50) der erste Fensterbereich (85) zumindest teilweise den Laserbearbeitungsbereich (40) umschließt.

5. Vorrichtung nach Anspruch 4, bei der
- der Drehteller (50) weiterhin ein zwischen einer Klemmposition und einer Offenposition hin und her bewegbares erstes Klemmelement (91) aufweist, wobei
- der in dem ersten Aufnahmebereich (51) aufgenommene erste SI-Gegenstand (11) in der Klemmposition des ersten Klemmelements (91) durch das erste Klemmelement (91) gegen einen Randbereich des Fensterbereichs (85) des ersten Deckbereichs (82) gedrückt ist, so dass hierdurch der erste SI-Gegenstand (11) in dem ersten Aufnahmebereich (51) fixiert ist und in der Offenposition des ersten Klemmelements (91) der erste SI-Gegenstand (11) zwischen dem ersten Auflagebereich (81) und dem ersten Deckbereich (82) bewegbar ist, sowie
- ein zwischen einer Klemmposition und einer Offenposition hin und her bewegbares zweites Klemmelement (92), wobei der in dem zweiten Aufnahmebereich (52) aufgenommene zweite SI-Gegenstand (12) in der Klemmposition des zweiten Klemmelements (92) durch das zweite Klemmelement (92) gegen einen Randbereich des Fensterbereichs (86) des zweiten Deckbereichs (84) gedrückt ist, so dass der zweite SI-Gegenstand (12) in dem zweiten Aufnahmebereich (52) fixiert ist und in der Offenposition des zweiten Klemmelements (92) der zweite SI-Gegenstand (12) zwischen dem zweiten Auflagebereich (83) und dem zweiten Deckbereich (84) bewegbar ist.

6. Vorrichtung nach Anspruch 5, bei der
- die Laserbearbeitungsstation (20) ein Greifelement (100) aufweist, das dazu eingerichtet ist, in der ersten Drehposition des Drehtellers (50) das zweite Klemmelement (92) zwischen der Offenposition und der Klemmposition hin und her zu bewegen.

7. Vorrichtung nach einem der vorhergehenden Ansprüche, weiterhin aufweisend
- eine Ladeeinheit (70), die dazu eingerichtet ist, in der ersten Drehposition des Drehtellers (50) zum Laden des zweiten Aufnahmebereichs (52) den zweiten SI-Gegenstand (12) entlang einer ersten Richtung (R1) in den zweiten Aufnahmebereich (52) hineinzuschieben, und/oder zum Entladen des zweiten Aufnahmebereichs (52) den zweiten SI-Gegenstand (12) entlang einer, zur ersten Richtung (R1) entgegengesetzten zweiten Richtung (R2) aus dem zweiten Aufnahmebereich (52) herauszuschieben.

8. Vorrichtung nach einem der vorhergehenden Ansprüche, weiterhin aufweisend
- wenigstens eine weitere Laserbearbeitungsstation (20'), die analog zu der ersten Laserbearbeitungsstation (20) ausgebildet ist;
- eine Transportvorrichtung (110), die dazu eingerichtet ist, SI-Gegenstände (11, 12) abwechselnd der ersten und der wenigstens einen weiteren Laserbearbeitungsstation (20, 20') zuzuführen.

9. Vorrichtung mit den in den Ansprüchen 8 und 7 genannten Merkmalen, bei der
- die Transportvorrichtung (110) dazu eingerichtet ist, die SI-Gegenstände (11, 12) jeweils der Ladeeinheit (70) der betreffenden Laserbearbeitungsstation (20, 20') zuzuführen.

10. Vorrichtung nach Anspruch 8 oder 9, bei der
- die Transportvorrichtung (110) einen Haupttransportweg (111) aufweist, sowie zwei, senkrecht zum Haupttransportweg (111) verlaufende Verteiltransportwege (112), wobei die Transportvorrichtung (110) dazu eingerichtet ist, die SI-Gegenstände (11, 12) über den Haupttransportweg (111) und die zwei Verteiltransportwege (112) den Laserbearbeitungsstationen (20, 20') zuzuführen und die SI-Gegenstände (11, 12) von den Laserbearbeitungsstationen (20, 20') wieder auf den Haupttransportweg (111) zurück zu transportieren.

11. Vorrichtung nach Anspruch 10, bei der
- die Verteiltransportwege (112) jeweils zu mindestens zwei Laserbearbeitungsstationen (20, 20') führen.

12. Vorrichtung nach Anspruch 10 oder 11, bei der
- die Transportvorrichtung (110) weiterhin eine, zwischen dem Haupttransportweg (111) und den Verteiltransportwegen (112) angeordnete Trenneinheit (113) umfasst, über die die SI-Gegenstände (11, 12) von dem Haupttransportweg (111) abwechselnd auf die zwei Verteiltransportwege (112) transportiert werden.

13. Verfahren zum Personalisieren von Sicherheits- oder Identifikationsgegenständen, kurz SI-Gegenständen (11, 12) mit wenigstens einer ersten Laserbearbeitungsstation (20),
aufweisend die folgenden Schritte:
(a) Anordnen eines ersten SI-Gegenstands (11) in einem ersten Aufnahmebereich (51) eines Drehtellers (50) der Laserbearbeitungsstation (20);
(b) Anordnen eines zweiten SI-Gegenstands (12) in einem zweiten Aufnahmebereich (52) des Drehtellers (50);
(c) Laserbestrahlen des in dem ersten Aufnahmebereich (51) aufgenommenen ersten SI-Gegenstands (11) für eine Personalisierung, wenn sich der Drehteller (50) in einer ersten Drehposition befindet, mittels einer Lasereinheit (30) der Laserbearbeitungsstation (20);
(d) Drehen des Drehtellers (50) aus der ersten Drehposition in eine zweite Drehposition;
(e) Laserbestrahlen des in dem zweiten Aufnahmebereich (52) aufgenommenen zweiten SI-Gegenstands (12) für eine Personalisierung, wenn sich der Drehteller (50) in der zweiten Drehposition befindet, mittels der Lasereinheit (30), **dadurch gekennzeichnet, dass** das Verfahren weiterhin den folgenden Schritt aufweist:
(f) Erfassen einer Lage des in dem zweiten Aufnahmebereich (52) aufgenommenen zweiten SI-Gegenstands (12), wenn sich der Drehteller (50) in der ersten Drehposition befindet und Verwenden einer Information über die Lage im Schritt (e).

14. Verfahren nach Anspruch 13, bei dem
- im Schritt (d) der Drehteller (50) um 180° ± 10° gedreht wird.

15. Verfahren nach einem der Ansprüche 13 oder 14, bei dem
- im Schritt (b) in der ersten Drehposition des Drehtellers (50) der zweite SI-Gegenstand (12) entlang einer ersten Richtung (R1) in den zweiten Aufnahmebereich (52) geschoben wird, und / oder
- in einem weiteren Schritt (g) in der ersten Drehposition des Drehtellers (50) der zweite SI-Gegenstand (12) entlang einer zur ersten Richtung (R1) entgegengesetzten zweiten Richtung (R2) aus dem zweiten Aufnahmebereich (52) heraus geschoben wird und/oder weiterhin aufweisend den folgenden Schritt:
(h) Transportieren von SI-Gegenständen und Aufteilen der SI-Gegenstände auf mehrere Laserbearbeitungsstationen (20, 20').

## Claims

1. An apparatus for personalising security or identification objects, in short SI objects (11, 12) with at least a first laser processing station (20), wherein the laser processing station (20) comprises:
- a laser unit (30) adapted to personalise an SI article (11, 12) located in a laser processing region (40) by laser irradiation,
- a turntable (50) having a first receiving region (51) for receiving a first SI object (11) and having a second receiving region (52) for receiving a second SI object (12); wherein
- the turntable (50) is
rotatably supported relative to the laser unit (30) about an axis of rotation (D) so that it can be rotated from a first rotational position to a second rotational position; wherein
- in the first rotational position of the turntable (50), the first SI object (11) disposed in the first receiving region (51) is at least partially located in the laser processing region (40); and wherein
- in the second rotational position of the turntable (50), the second SI object (12) disposed in the second receiving region (52) is at least partially located in the laser processing region (40), **characterized in that** the apparatus further comprises:
- a laser irradiation preparation unit (60) for preparing laser irradiation,
wherein the laser irradiation preparation unit (60) is arranged to detect a position of the second SI object (12) received in the second receiving region (52) in the first rotational position of the turntable (50) and to transmit information about the detected position to the laser unit (30); and wherein
- the laser unit (30) is arranged to use the transmitted information as an input quantity in a subsequent laser irradiation of the second SI object (12).

2. The apparatus according to claim 1, in which the turntable (50) can be rotated from the first rotational position to the second rotational position by a rotation of 180° ± 10° about the axis of rotation (D).

3. The apparatus according to any one of the preceding claims, wherein
- the turntable (50) has a first support region (81) and a first cover region (82) to form the first receiving region (51), such that the first SI article (11) received in the first receiving region (51) is located between the first support region (81) and the first cover region (82),
a second support portion (83) and a second cover portion (84) to form the second receiving portion (52), such that the second SI object (12) received in the second receiving portion (52) is located between the second support portion (83) and the second cover portion (84).

4. The apparatus according to claim 3, wherein
- the first cover region (82) comprises a window region (85) and the second cover region (84) comprises a window region (86), wherein
- in the first rotational position of the turntable (50), the first window region (85) at least partially encloses the laser processing region (40).

5. The apparatus of claim 4, wherein
- the turntable (50) further comprises a first clamping member (91) reciprocally movable between a clamping position and an open position, wherein
- in the clamping position of the first clamping member (91), the first SI article (11) received in the first receiving portion (51) is pressed by the first clamping member (91) against an edge portion of the window portion (85) of the first cover portion (82), so that the first SI object (11) is thereby fixed in the first receiving region (51) and in the open position of the first clamping element (91) the first SI object (11) is movable between the first support region (81) and the first cover region (82), as well as
- a second clamping member (92) reciprocally movable between a clamping position and an open position, wherein in the clamping position of the second clamping member (92) the second SI article (12) received in the second receiving portion (52) is pressed against an edge portion of the window portion (86) of the second cover portion (84) by the second clamping member (92), so that the second SI object (12) is fixed in the second receiving region (52) and in the open position of the second clamping element (92) the second SI object (12) is movable between the second support region (83) and the second cover region (84).

6. The apparatus according to claim 5, wherein
- the laser processing station (20) comprises a gripping element (100) adapted to reciprocate the second clamping element (92) between the open position and the clamping position when the turntable (50) is in the first rotational position.

7. The apparatus according to any one of the preceding claims, further comprising
- a loading unit (70) which, in the first rotational position of the turntable (50), is arranged to push the second SI article (12) along a first direction (R1) into the second receiving region (52) in order to load the second receiving region (52), and/or to push the second SI article (12) along a second direction (R2), opposite to the first direction (R1), out of the second receiving region (52) in order to unload the second receiving region (52).

8. The apparatus according to any one of the preceding claims, further comprising
- at least one further laser processing station (20') which is designed analogously to the first laser processing station (20);
- a transport apparatus (110) which is set up to feed SI objects (11, 12) alternately to the first and the at least one further laser processing station (20, 20').

9. The apparatus having the features mentioned in claims 8 and 7, wherein
- the transport apparatus (110) is arranged to feed the SI objects (11, 12) respectively to the loading unit (70) of the relevant laser processing station (20, 20').

10. The apparatus according to claim 8 or 9, wherein
- the transport apparatus (110) comprises a main transport path (111) and two distribution transport paths (112) extending
perpendicularly to the main transport path (111), the transport apparatus (110) being arranged to feed the SI objects (11, 12) to the laser processing stations (20, 20') via the main transport path (111) and the two distribution transport paths (112) and to transport the SI objects (11, 12) from the laser processing stations (20, 20') back to the main transport path (111).

11. The apparatus according to claim 10, wherein
- the distribution transport paths (112) each lead to at least two laser processing stations (20, 20').

12. The apparatus according to claim 10 or 11, wherein
- the transport apparatus (110) further comprises a separating unit (113), arranged between the main transport path (111) and the distribution transport paths (112), via which the SI objects (11, 12) are transported from the main transport path (111) alternately to the two distribution transport paths (112).

13. A method for personalising security or identification objects, in short SI objects (11, 12) with at least one first laser processing station (20),
comprising the following steps:
(a) placing a first SI item (11) in a first receiving region (51) of a turntable (50) of the laser processing station (20);
(b) placing a second SI item (12) in a second receiving region (52) of the turntable (50);
(c) laser irradiating the first SI item (11) received in the first receiving region (51) for personalisation when the turntable (50) is in a first rotational position by means of a laser unit (30) of the laser processing station (20);
(d) rotating the turntable (50) from the first rotational position to a second rotational position;
(e) laser irradiating the second SI object (12) received in the second receiving region (52) for personalisation when the turntable (50) is in the second rotational position by means of the laser unit (30), **characterised in that** the method further comprises the step of:
(f) detecting a position of the second SI object (12) received in the second receiving region (52) when the turntable (50) is in the first rotational position and using information about the position in step (e).

14. The method according to claim 13, wherein
- in step (d) the turntable (50) is rotated by 180° ± 10°.

15. The method according to any one of claims 13 or 14, wherein
- in step (b), in the first rotational position of the turntable (50), the second SI object (12) is pushed along a first direction (R1) into the second receiving region (52), and/or
- in a further step (g), in the first rotational position of the turntable (50), the second SI object (12) is pushed
along a second direction (R2)
opposite to the first direction (R1) out of the second receiving region (52) and/or further comprising the following step:
(h) transport SI items and distribute the SI items to several laser processing stations (20, 20').

## Revendications

1. Un dispositif de personnalisation d'objets de sécurité ou d'identification, en abrégé objets SI (11, 12), comprenant au moins un premier poste d'usinage laser (20), le poste d'usinage laser (20) comprenant ce qui suit :
- une unité laser (30) adaptée pour personnaliser un objet SI (11, 12) situé dans une zone de traitement laser (40) par une irradiation laser,
- un plateau tournant (50) avec une première zone de réception (51) pour recevoir un premier objet SI (11) et avec une deuxième zone de réception (52) pour recevoir un deuxième objet SI (12) ; dans lequel
- le plateau tournant (50) est monté de manière à pouvoir tourner par rapport à l'unité laser (30) autour d'un axe de rotation (D), de sorte qu'il peut être tourné d'une première position de rotation dans une deuxième position de rotation ; dans lequel
- dans la première position de rotation du plateau tournant (50), le premier objet SI (11) disposé dans la première zone de réception (51) se trouve au moins partiellement dans la zone de traitement laser (40) ; et dans lequel
- dans la deuxième position de rotation du plateau tournant (50), le deuxième objet SI (12) disposé dans la deuxième zone de réception (52) se trouve au moins partiellement dans la zone de traitement laser (40), **caractérisé en ce que** le dispositif comprend en outre :
- une unité de préparation d'irradiation laser (60) pour préparer une irradiation laser, l'unité de préparation d'irradiation laser (60) étant conçue pour détecter, dans la première position de rotation du plateau tournant (50), une position du deuxième objet SI (12) reçu dans la deuxième zone de réception (52) et pour transmettre à l'unité laser (30) une information sur la position détectée ; et dans lequel
- l'unité laser (30) est conçue pour utiliser l'information transmise comme grandeur d'entrée lors d'une irradiation laser suivante du deuxième objet SI (12).

2. Le dispositif selon la revendication 1, dans lequel le plateau tournant (50) peut être tourné de la première position de rotation à la deuxième position de rotation par une rotation de 180° ± 10° autour de l'axe de rotation (D).

3. Le dispositif selon l'une quelconque des revendications précédentes, dans lequel
- le plateau tournant (50) comporte une première zone d'appui (81) et une première zone de recouvrement (82) pour former la première zone de réception (51), de sorte que le premier objet SI (11) reçu
dans la première zone de réception (51) se trouve entre la première zone d'appui (81) et la première zone de recouvrement (82), ainsi que
- une deuxième zone de support (83) et une deuxième zone de recouvrement (84) pour former la deuxième zone de réception (52), de telle sorte que le deuxième objet SI (12) reçu dans la deuxième zone de réception (52) se trouve entre la deuxième zone de support (83) et la deuxième zone de recouvrement (84).

4. Le dispositif selon la revendication 3, dans lequel
- la première zone de recouvrement (82) présente une zone de fenêtre (85) et la deuxième zone de recouvrement (84) une zone de fenêtre (86), dans lequel
- dans la première position de rotation du plateau tournant (50), la première zone de fenêtre (85) entoure au moins partiellement la zone d'usinage au laser (40).

5. Le dispositif selon la revendication 4, dans lequel
- le plateau tournant (50) présente en outre un premier élément de serrage (91) mobile en va-et-vient entre une position de serrage et une position d'ouverture, dans lequel
- le premier objet SI (11) reçu dans la première zone de réception (51) est pressé par le premier élément de serrage (91) contre une zone de bordure de la zone de fenêtre (85) de la première zone de couverture (82) dans la position de serrage du premier élément de serrage (91), de sorte que le premier objet SI (11) est ainsi fixé dans la première zone de réception (51) et, dans la position ouverte du premier élément de serrage (91), le premier objet SI (11) peut être déplacé entre la première zone d'appui (81) et la première zone de recouvrement (82), ainsi que
- un deuxième élément de serrage (92) mobile en va-et-vient entre une position de serrage et une position d'ouverture, le deuxième objet SI (12) reçu dans la deuxième zone de réception (52) étant, dans la position de serrage du deuxième élément de serrage (92), pressé par le deuxième élément de serrage (92) contre une zone de bordure de la zone de fenêtre (86) de la deuxième zone de couverture (84), de sorte que le deuxième objet SI (12) est fixé dans la deuxième zone de réception (52) et que, dans la position ouverte du deuxième élément de serrage (92), le deuxième objet SI (12) peut être déplacé entre la deuxième zone d'appui (83) et la deuxième zone de recouvrement (84).

6. Le dispositif selon la revendication 5, dans lequel:
- le poste d'usinage laser (20) comprend un élément de préhension (100) adapté pour déplacer en va-et-vient le deuxième élément de serrage (92) entre la position ouverte et la position de serrage dans la première position de rotation du plateau tournant (50).

7. Le dispositif selon l'une quelconque des revendications précédentes, comprenant en outre
- une unité de chargement (70) qui est conçue pour, dans la première position de rotation du plateau tournant (50), pour charger la deuxième zone de réception (52), pousser le deuxième objet SI (12) le long d'une première direction (R1) dans la deuxième zone de réception (52), et/ou pour décharger la deuxième zone de réception (52), pousser le deuxième objet SI (12) le long d'une deuxième direction (R2) opposée à la première direction (R1) hors de la deuxième zone de réception (52).

8. Le dispositif selon l'une quelconque des revendications précédentes, comprenant en outre
- au moins un autre poste d'usinage au laser (20'), qui est conçu de manière analogue au premier poste d'usinage au laser (20) ;
- un dispositif de transport (110), qui est conçu pour amener des objets SI (11, 12) alternativement au premier et au au moins un autre poste d'usinage au laser (20, 20').

9. Le dispositif présentant les caractéristiques mentionnées dans les revendications 8 et 7, dans lequel
- le dispositif de transport (110) est conçu pour amener les objets SI (11, 12) respectivement à l'unité de chargement (70) du poste d'usinage au laser (20, 20') concerné.

10. Le dispositif selon la revendication 8 ou 9, dans lequel
- le dispositif de transport (110) présente une voie de transport principale (111), ainsi que deux voies de transport de distribution (112) s'étendant perpendiculairement à la voie de transport principale (111), le dispositif de transport (110) étant conçu pour transporter les objets SI (11, 12) aux stations de traitement au laser (20, 20') par le biais de la voie de transport principale (111) et des deux voies de transport de distribution (112), et de ramener les objets SI (11, 12) des stations de traitement au laser (20, 20') sur la voie de transport principale (111).

11. Le dispositif selon la revendication 10, dans lequel
- les voies de transport de distribution (112) conduisent chacune à au moins deux stations d'usinage au laser (20, 20').

12. Le dispositif selon la revendication 10 ou 11, dans lequel
- le dispositif de transport (110) comprend en outre une unité de séparation (113) disposée entre la voie de transport principale (111) et les voies de transport de distribution (112), par l'intermédiaire de laquelle les objets SI (11, 12) sont transportés alternativement depuis la voie de transport principale (111) sur les deux voies de transport de distribution (112).

13. Un procédé de personnalisation d'objets de sécurité ou d'identification, en bref d'objets SI (11, 12) avec au moins un premier poste de traitement laser (20), comprenant les étapes suivantes :
(a) placer un premier objet SI (11) dans une première zone de réception (51) d'un plateau tournant (50) du poste de traitement laser (20) ;
(b) placer un deuxième objet SI (12) dans une deuxième zone de réception (52) du plateau tournant (50) ;
(c) irradiation au laser du premier objet SI (11) reçu dans la première zone de réception (51) pour une personnalisation, lorsque le plateau tournant (50) se trouve dans une première position de rotation, au moyen d'une unité laser (30) du poste de traitement au laser (20) ;
(d) faire tourner le plateau tournant (50) de la première position de rotation à une deuxième position de rotation ;
(e) irradier au laser le deuxième objet SI (12) reçu dans la deuxième zone de réception (52) pour une personnalisation lorsque le plateau tournant (50) est dans la deuxième position de rotation, au moyen de l'unité laser (30), **caractérisé en ce que** le procédé comprend en outre l'étape suivante :
(f) détecter une position du deuxième objet SI (12) reçu dans la deuxième zone de réception (52) lorsque le plateau tournant (50) se trouve dans la première position de rotation et utiliser une information sur la position à l'étape (e).

14. Le procédé selon la revendication 13, dans lequel
- à l'étape (d), on fait tourner le plateau tournant (50) de 180° ± 10°.

15. Le procédé selon l'une des revendications 13 ou 14, dans lequel
- à l'étape (b), dans la première position de rotation du plateau tournant (50), le deuxième objet SI (12) est poussé dans la deuxième zone de réception (52) le long d'une première direction (R1), et/ou
- à une autre étape (g), dans la première position de rotation du plateau tournant (50), le deuxième objet SI (12) est poussé hors de la deuxième zone de réception (52)
le long d'une deuxième direction (R2)
opposée à la première direction (R1) et/ou présentant en outre l'étape suivante :
(h) transporter des objets SI et répartir les objets SI entre plusieurs stations de traitement laser (20, 20').
